(19) Europäisches Patentamt
European Patent Office
Office européen des brevets

(11) **EP 4 674 929 A1**

(12) **EUROPEAN PATENT APPLICATION**
published in accordance with Art. 153(4) EPC

(43) Date of publication:
**07.01.2026 Bulletin 2026/02**

(21) Application number: **24764042.8**

(22) Date of filing: **01.03.2024**

(51) International Patent Classification (IPC):
***C10B 57/04*** (2006.01)   ***C10B 53/02*** (2006.01)

(52) Cooperative Patent Classification (CPC):
**C10B 53/02; C10B 57/04;** Y02E 50/10

(86) International application number:
**PCT/JP2024/007807**

(87) International publication number:
**WO 2024/181565 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.03.2023 JP 2023031338**

(71) Applicant: NIPPON STEEL CORPORATION
Chiyoda-ku
Tokyo 100-8071 (JP)

(72) Inventors:
• **AIZAWA, Sadayoshi**
  **Tokyo 100-8071 (JP)**
• **MATSUO, Shohei**
  **Tokyo 100-8071 (JP)**
• **KUBOTA, Yukihiro**
  **Tokyo 100-8071 (JP)**

(74) Representative: **Vossius & Partner
Patentanwälte Rechtsanwälte mbB
Siebertstrasse 3
81675 München (DE)**

(54) **COKE PRODUCTION METHOD**

(57) Provided is a coke production method with which it is possible to suppress, with a simple procedure, coke strength deterioration due to the use of biomass, while said biomass is contained in blended coal serving as a coke raw material. In one aspect, the present invention provides a coke production method including a step for preparing blended coal containing coal and torrefied woody biomass, and a step for coking said blended coal, wherein: (1) the torrefied woody biomass has a volatile content of 25 mass% or less and has particle sizes such that the mass percentage of particles in the range of 0.10-mm plus sieve and 0.60-mm minus sieve is equal to or greater than 60 mass% according to sieving in conformity to the particle-size testing method defined in JIS M8801:2008; or (2) the torrefied woody biomass has a volatile content that is greater than 25 mass% and equal to or less than 40 mass% and has particle sizes such that the mass percentage of particles in the range of 0.10-mm plus sieve and 0.30-mm minus sieve is equal to or greater than 60 mass% according to said sieving.

Fig. 1

**Description**

FIELD

The present invention relates to a method of producing coke using blended coal including a torrefied woody biomass.

BACKGROUND

In the past, due to the rising interest in environmental issues, production of coke using blended coal comprised of the renewable resource of a biomass added to coal has been studied. A biomass is low in energy efficiency and also poor in handling ability in its natural state, therefore a biomass raised in carbon ratio by heat treatment, for example, a torrefied biomass, has been provided in the past. Use of this torrefied biomass for coke production is also being studied.

PTL 1 describes a method of heating and carbonizing coking coal to produce coke characterized by charging pre-heat treated woody waste together with the coking coal into a coke furnace.

[CITATION LIST]

[PATENT LITERATURE]

[PTL 1] Japanese Unexamined Patent Publication No. 2004-307683

SUMMARY

[TECHNICAL PROBLEM]

The art described in PTL 1 tries to provide a method of production of coke using coking coal and woody waste torrefied in advance by heat treatment so as to be able to treat a large amount of woody waste at one time without causing a deterioration of quality of the coke. PTL 1 describes treatment where torrefaction does not cause the woody waste to be completely carbonized, but reduces the amount of volatile matter in woody waste to a certain extent. Regarding the properties of the woody waste used, PTL 1, further, illustrates an amount of volatile matter contained in the woody waste after heat treatment of 45 to 65 mass%. However, such high volatile component woody waste greatly shrinks at the time of coking making defects due to peeling from the coked parts derived from the coking coal easier to occur, therefore it is believed the coke strength is easily lowered. PTL 1 does not focus on means for reducing such an inconvenience at the time of such coking.

One aspect of the present invention has as its object the provision of a method of production of coke which solves the above technical issue and enables a biomass to be mixed with the blended coal of the starting material of the coke while enables the drop in coke strength due to use of that biomass to be suppressed by a simple procedure.

[SOLUTION TO PROBLEM]

The gist of the present invention is as follows:

[1] A method of production of coke, the method comprising

a step of preparing a blended coal containing coal and a torrefied woody biomass and
a step of converting the blended coal to coke,
the torrefied woody biomass

(1) having an amount of volatile matter of 25 mass% or less and a grain size giving a mass ratio of over a 0.10 mm screen and under a 0.60 mm screen of 60 mass% or more in sieving based on the grain size test method prescribed in JIS M8801:2008 or
(2) having an amount of volatile matter of more than 25 mass% and 40 mass% or less and a grain size giving a mass ratio of over a 0.10 mm screen and under a 0.30 mm screen of 60 mass% or more in the sieving.

[2] A method of production of coke,

the method comprising

a step of preparing a blended coal containing coal and a torrefied woody biomass and
a step of converting the blended coal to coke,
the torrefied woody biomass

(1) having an amount of volatile matter of 25 mass% or less and a grain size over a 0.10 mm screen and under a 0.60 mm screen in sieving based on the grain size test method prescribed in JIS M8801:2008 or
(2) having an amount of volatile matter of more than 25 mass% and 40 mass% or less and a grain size over a 0.10 mm screen and under a 0.30 mm screen in the sieving.

[3] The method of production of coke according to item 2, wherein

the amount of volatile matter of 25 mass% or less is 15.9 mass% or more and 23.7 mass% or less, and
the amount of volatile matter of more than 25 mass% and 40 mass% or less is 28.9 mass% or more and 38.2 mass% or less.

[4] A method of production of coke, the method comprising

a step of preparing a blended coal containing coal and a torrefied woody biomass and
a step of converting the blended coal to coke,
the torrefied woody biomass having an amount of volatile matter of 40 mass% or less and a grain size giving a mass ratio of over a 0.10 mm screen and under a 0.60 mm screen of 60 mass% or more in sieving based on the grain size test method prescribed in JIS M8801:2008,
the grain size of the torrefied woody biomass being adjusted in accordance with the amount of volatile matter of the torrefied woody biomass based on a relational expression prepared in advance of a variable x of an amount of volatile matter of the torrefied woody biomass and a variable y of a grain size of the torrefied woody biomass, the relational expression being an expression with a negative slant ($\Delta y/\Delta x$) which is a ratio of an amount of increase $\Delta y$ of the variable y with respect to an amount of increase $\Delta x$ of the variable x.

[5] The method of production of coke according to any one of items 1 to 4, wherein the torrefied woody biomass is a product of heat treatment of woody biomass at 200°C or more and 500°C or less.

[ADVANTAGEOUS EFFECTS OF INVENTION]

According to one aspect of the present invention, it is possible to provide a method of production of coke which enables a biomass to be mixed with the blended coal of the starting material of the coke while enables the drop in coke strength due to use of that biomass to be suppressed by a simple procedure.

BRIEF DESCRIPTION OF DRAWINGS

FIG. 1 is a view showing a relationship between a grain size of a torrefied woody biomass and I-type drum strength of coke.
FIG. 2 is a view showing a relationship between an amount of volatile matter (VM) of a torrefied woody biomass and I-type drum strength of coke for a grain size class (a) of more than 0.10 mm to 0.30 mm or less according to Examples 1 to 6.
FIG. 3 is a view showing a relationship between an amount of volatile matter (VM) of a torrefied woody biomass and I-type drum strength of coke for a grain size class (b) of more than 0.30 mm to 0.60 mm or less according to Examples 7 to 9 and Comparative Examples 1 to 3.
FIG. 4 is a view showing a relationship between an amount of volatile matter (VM) of a torrefied woody biomass and I-type drum strength of coke for a grain size class (c) of more than 0.60 mm to 1.00 mm or less according to Comparative Examples 4 to 9.
FIG. 5 is a view showing a relationship between an amount of volatile matter (VM) of a torrefied woody biomass and I-type drum strength of coke for a grain size class (d) of more than 1.00 mm to 3.00 mm or less according to Comparative Examples 10 to 15.
FIG. 6 is a view showing a degree of drop of I-type drum strength of coke due to use of a torrefied woody biomass as a mean value at an amount of volatile matter (VM) of 25 mass% or less.
FIG. 7 is a view showing a degree of drop of I-type drum strength of coke due to use of a torrefied woody biomass as a mean value at an amount of volatile matter (VM) of more than 25 mass%.

FIG. 8 is a view showing a relationship between a grain size distribution and I-type drum strength in Examples 10 to 13 and Comparative Example 16.

FIG. 9 is a view showing a relationship between a grain size distribution and I-type drum strength in Examples 14 to 17 and Comparative Example 17.

FIG. 10 is a view replotting the plot shown in FIG. 1 to x-axis: amount of volatile matter and y-axis: medium grain size.

DESCRIPTION OF EMBODIMENTS

Below, an illustrative aspect of the present invention (sometimes also referred to as "the present embodiment" in the present disclosure) will be explained, but the present invention is not limited to the following aspect.

The present embodiment provides a method of production of coke including a step of preparing blended coal containing coal and a torrefied woody biomass and a step of converting the blended coal to coke. Using a biomass in addition to coal as a starting material for coke is advantageous from the viewpoint of slashing the amount of use of fossil resources by effective utilization of renewable resources.

<Torrefied woody biomass>

In the present disclosure, a "biomass" means a renewable biological origin organic resource other than a fossil resource. A biomass generally originates from agriculture, forestry, livestock, fisheries, waste, etc. A "woody biomass" is a biomass having a woody structure. A woody biomass may be derived from hardwoods, softwoods, zelkova, bamboo, etc. A woody biomass may have various origins and forms. For example, it may be logs, thinned wood, scraps, waste wood, sawdust, bark, branches and leaves, etc. A woody biomass may also be chips, powders, pellets, etc. As pellets of a woody biomass, wood pellets (white pellets), bark pellets, whole tree pellets, etc. may be illustrated. A torrefied woody biomass typically can be obtained by heat treatment of a woody biomass, more specifically by dry distillation (that is, heating in a state cut off from the air).

A woody biomass is readily available in large amounts and is relatively uniform in quality. Further, compared with a nonwoody biomass, a woody biomass tends to be lower in content of ash and other noncarbon inorganic matter, therefore can be advantageous on the points of energy efficiency and less corrosiveness to facilities. From the above viewpoints, a woody biomass is particularly suitable as a starting material for coke.

A torrefied woody biomass is increased in carbon ratio by the organic components in the biomass being broken down by the heat treatment, but is not completely carbonized, therefore is a biomass still containing organic components. If carbonizing a biomass, the advantages are obtained of improvement of energy efficiency due to the increase in amount of combustion per unit mass, improvement of the ease of crushing, improvement of the transportability due to reduction of void, and improvement of handling ability due to hydrophobization (for example, being able to be stored in existing outdoor facilities in the same way as coal). That is, a torrefied woody biomass is useful as a coke starting material on the points of high energy efficiency, suitable shrinkage close to coal at the time of heating, easy crushability, and hydrophobicity. Note that a completely carbonized biomass is low in energy efficiency, therefore is generally not suitable for a coke starting material.

In one aspect, a torrefied woody biomass is differentiated from a completely carbonized biomass on the point of the low temperature of heating for carbonizing the biomass (more specifically, a maximum 500°C).

In one aspect, a torrefied woody biomass is differentiated from a completely carbonized biomass on the point of the high amount of volatile matter (more specifically, 1 mass% or more).

When converting coal to coke by carbonization, that coal softens and melts to thereby expand whereupon the coal particles bond together and, through shrinkage due to degasification, a resolidified coke is formed. When using a blended coal containing coal and a biomass to produce coke, to prevent the coke strength from greatly falling compared with using only coal, at the time of the end of the carbonization, it is desirable that the occurrence of defects due to peeling of the coke parts derived from the coal and the coke parts derived from the biomass (in the present disclosure, called "peeling defects") be suppressed, more specifically, a biomass with a relatively small rate of shrinkage at the time of heating (below, the "heat shrinkage rate") be used. The main components of a biomass are carbon, hydrogen, and oxygen. The heat shrinkage rate of a noncarbonized biomass tends to be much greater compared with general coal, but in a torrefied woody biomass, the volatile matter and easily heat decomposed components are decreased, whereby the heat shrinkage rate is reduced compared with before carbonization. A torrefied woody biomass can resemble coal in heat shrinkage behavior at the time of coking, so at the time of coking, it becomes harder for peeling defects to occur between the coke parts derived from the coal and coke parts derived from the biomass and high strength coke can be formed.

The fixed carbon ratio of a torrefied woody biomass is preferably 50 mass% or more, 60 mass% or more, or 70 mass% or more on the point of the heat shrinkage rate being small and the energy efficiency being excellent. Excessive carbonization does not occur, the energy efficiency is excellent, and coking behavior is similar to coal, so preferably the ratio is 90 mass% or less or 80 mass% or less. The fixed carbon ratio is the value measured by the proximate analysis described more specifically in the section on "Examples".

The ash component ratio of the torrefied woody biomass is preferably 10 mass% or less, 5 mass% or less, or 4 mass% or less from the viewpoint of energy efficiency and handling ability. The smaller the ash ratio, the more preferable, but from the viewpoint of the availability of torrefied woody biomass, in one aspect, it may be 0.5 mass% or more, 1.0 mass% or more, or 2.0 mass% or more. The ash ratio is the value measured by the proximate analysis described more specifically in the section on "Examples".

The carbon element ratio of the torrefied woody biomass is preferably 50 mass% or more, 60 mass% or more, or 70 mass% or more from the viewpoint of the heat shrinkage rate being small and the energy efficiency being excellent. From the viewpoint of excessive carbonization not occurring, the energy efficiency being excellent, and the shrinkage behavior at the time of coking being similar to coal, it is preferably 90 mass% or less or 80 mass% or less.

The hydrogen element ratio of the torrefied woody biomass, in one aspect, may be 1 mass% or more and 5 mass% or less.

The nitrogen element ratio of the torrefied woody biomass, in one aspect, may be 0.1 mass% or more and 2.0 mass% or less.

The oxygen element ratio of the torrefied woody biomass, in one aspect, may be 1 mass% or more and 20 mass% or less.

The total sulfur element ratio of the torrefied woody biomass, in one aspect, may be 0.01 mass% or more and 1.50 mass% or less.

The above element ratios are the values measured by the elemental analysis described more specifically in the section on "Examples".

The moisture content of the woody biomass before torrefaction may be various ones corresponding to the origin of the biomass. For example, a woody biomass may be made to dry to adjust the moisture content to 5 mass% to 15 mass% or so. The moisture content of the torrefied woody biomass, in one aspect, may be 1 mass% to 5 mass% or 1 mass% to 3 mass%. The moisture content is a value measured by JIS M8820-2000.

The bulk density of the torrefied woody biomass, in one aspect, can be 300 kg/m$^3$ to 1000 kg/m$^3$ or so. The bulk density is a value measured based on ISO 17828:2015.

The amount of heat generated of the torrefied woody biomass, in one aspect, can be 4000 kcal/kg to 6000 kcal/kg. The amount of heat generated is a value measured based on ISO 18125:2017.

The torrefaction may be performed by heating any shape of (for example, chips, powders, pellets, etc.) of a woody biomass. More specifically, it may be performed by dry distillation, that is, heating in a state cut off from the air. As the heating apparatus, an electric furnace or other batch type heater and a kiln or other continuous type heater may be mentioned. The heating may be performed at ordinary pressure, but the invention is not limited to this. The heating temperature is preferably 200°C or more, 210°C or more, 220°C or more, 230°C or more, 240°C or more, 250°C or more, 260°C or more, 270°C or more, or 280°C or more from the viewpoint of making the carbonization of the biomass proceed well. From the viewpoint of avoiding excessive carbonization and realizing the desired torrefied state and easily adjusting the amount of volatile matter of the torrefied woody biomass to a desired range, it is preferably 500°C or less, 400°C or less, 390°C or less, 380°C or less, 370°C or less, 360°C or less, 350°C or less, 340°C or less, 330°C or less, 320°C or less, 310°C or less, or 300°C or less. The heating time may be suitably selected in accordance with the properties of the biomass used, the desired amount of volatile matter, etc. and may for example be 10 minutes to 30 minutes. The torrefaction may also be performed in superheated steam. It is also possible to adjust the rate of temperature rise at the time of heating to adjust the chemical composition of the torrefied product.

The obtained product (more specifically the dry distilled product) or that product (more specifically the dry distilled product) to which starch or another binder is added, then the components kneaded to obtain a kneaded product can be formed into the desired shape and recovered as a torrefied woody biomass. The torrefied woody biomass may be powders, pellets, etc.

As pellets of the woody biomass before torrefaction or the torrefied woody biomass, cylindrically shaped pellets with a diameter of 5 mm to 10 mm and a length of 5 mm to 50 mm can be illustrated.

Due to the torrefaction, the moisture, various gases, wood vinegar, etc. in the woody biomass can be removed. Wood tar may also be removed or may remain without being substantially removed. The removed components may contain acids, alcohols, phenols, and other useful chemical substances. The substances may be utilized as industrial materials in various applications. In one aspect, the torrefied product containing wood tar is advantageous from the viewpoint of the energy efficiency.

[Grain Size]

The torrefied woody biomass, in one aspect, includes particles over a 0.10 mm screen (that is, more than 0.10 mm) and under a 0.60 mm screen (that is, 0.60 mm or less) in sieving based on the grain size test method prescribed in JIS M8801:2008 in at least a 60 mass% mass ratio. That mass ratio is preferably 70 mass% or more, 80 mass% or more, 90 mass% or more, or 100 mass%. In particular, at a mass ratio of 80 mass% or more, the improvement in coke strength accompanying an increase in that mass ratio tends to be remarkable.

The torrefied woody biomass, in one aspect, includes particles over a 0.10 mm screen (that is, more than 0.10 mm) and under a 0.30 mm screen (that is, 0.30 mm or less) in that sieving in at least a 60 mass% mass ratio. That mass ratio is preferably 70 mass% or more, 80 mass% or more, 90 mass% or more, or 100 mass%.

The grain size of the grains accounting for 60 mass% or more of the torrefied woody biomass as a whole, from the viewpoint of availability, is, in one aspect, over a 0.10 mm screen (that is, more than 0.10 mm), over a 0.15 mm screen (that is, more than 0.15 mm), over a 0.18 mm screen (that is, more than 0.18 mm), or over the 0.212 mm screen (that is, more than 0.212 mm). If the grain size of the torrefied woody biomass is large, once peeling defects occur at the time of coking, they easily grow to large size defects. Therefore, the grain size being relatively small is advantageous in the point of the coke strength. In particular, grains with excessively large grain size not being present is advantageous on the point of the coke strength. From the above viewpoint, the grain size of the grains accounting for 60 mass% or more of the torrefied woody biomass as a whole is, in one aspect, under a 0.60 mm screen (that is, 0.60 mm or less), preferably under a 0.50 mm screen (that is 0.50 mm or less), under a 0.425 mm screen (that is, 0.425 mm or less), under a 0.355 mm screen (that is, 0.355 mm or less), or under a 0.30 mm screen (that is, 0.30 mm or less). The grain size is specifically evaluated based on "5. Grain Size Test Method" of JIS M8801:2008 using a sieve based on JIS Z8801:2019. In a preferable aspect, the grain size of the grains accounting for 70 mass% or more, 80 mass% or more, 90 mass% or more, or 100 mass% of the torrefied woody biomass as a whole is in the above range.

In a torrefied woody biomass containing at least 60 mass% of grains over a 0.10 mm screen and under a 0.60 mm screen, the mass ratio over a 0.60 mm screen is 40 mass% or less. Coarse grains being less in number is advantageous on the point of coke strength, therefore this mass ratio over a 0.60 mm screen is preferably 30 mass% or less, 20 mass% or less, 10 mass% or less, or 0 mass%.

In a torrefied woody biomass containing at least 60 mass% of grains over a 0.10 mm screen and under a 0.30 mm screen, the mass ratio over a 0.30 mm screen is 40 mass% or less. Coarse grains being less in number is advantageous on the point of coke strength, therefore this mass ratio over a 0.30 mm screen is preferably 30 mass% or less, 20 mass% or less, 10 mass% or less, or 0 mass%.

In a preferred aspect, a torrefied woody biomass containing at least 60 mass% of grains over a 0.10 mm screen and under a 0.60 mm screen has a mass ratio under a 0.038 mm screen of 1 mass% or less and a mass ratio over a 2.80 mm screen of 1 mass% or less and has a mean size of the grains over a 0.038 mm screen and under a 2.80 mm screen of 0.212 mm or more and 0.505 mm or less.

In a preferred aspect, a torrefied woody biomass containing at least 60 mass% of grains over a 0.10 mm screen and under a 0.30 mm screen has a mass ratio under a 0.038 mm screen of 1 mass% or less and a mass ratio over a 2.80 mm screen of 1 mass% or less and has a mean size of the grains over a 0.038 mm screen and under a 2.80 mm screen of 0.147 mm or more and 0.299 mm or less.

The above mean size is preferably the above lower limit or more from the viewpoint of availability and preferably the above upper limit or less from the viewpoint of obtaining excellent coke strength. The "mean size of grains over a 0.038 mm screen and under a 2.80 mm screen" of the present disclosure is found by the following procedure based on "5. Grain Size Test Method" of JIS M8801:2008 using a sieve based on JIS Z8801:2019. Specifically, the torrefied woody biomass is sieved and the grains over a 0.038 mm screen and under a 0.10 mm screen are deemed grains with a medium grain size of 0.069 mm (that is, center value between 0.038 mm and 0.10 mm, same below), the grains over a 0.10 mm screen and under a 0.15 mm screen are deemed grains with a medium grain size of 0.125 mm, the grains over a 0.15 mm screen and under a 0.30 mm screen are deemed grains with a medium grain size of 0.225 mm, the grains over a 0.30 mm screen and under a 0.60 mm screen are deemed grains with a medium grain size of 0.450 mm, the grains over a 0.60 mm screen and under a 1.00 mm screen are deemed grains with a medium grain size of 0.80 mm, the grains over a 1.00 mm screen and under a 1.40 mm screen are deemed grains with a medium grain size of 1.20 mm, the grains over a 1.40 mm screen and under a 2.00 mm screen are deemed grains with a medium grain size of 1.70 mm, and the grains over a 2.00 mm screen and under a 2.80 mm screen are deemed grains with a medium grain size of 2.40 mm.

Further, the mean size is calculated in accordance with the following formula:

Mean size (mm)=0.069×[mass ratio of grains of medium grain size of 0.069 mm]+0.125×[mass ratio of grains of medium grain size of 0.125 mm]+0.225×[mass ratio of grains of medium grain size of 0.225 mm]+0.450×[mass ratio of grains of medium grain size of 0.450 mm]+0.80×[mass ratio of grains of medium grain size of 0.80 mm]+1.20×[mass ratio of grains of medium grain size of 1.20 mm]+1.70×[mass ratio of grains of medium grain size of 1.70 mm]+2.40×[mass ratio of grains of medium grain size of 2.40 mm]

The torrefied woody biomass, in one aspect, has a grain size of over a 0.10 mm screen (that is, more than 0.10 mm) and under a 0.60 mm screen (that is, 0.60 mm or less) in sieving based on the grain size test method prescribed in JIS M8801:2008. Therefore, in one aspect, the grain size of all of the grains of the torrefied woody biomass is within a range of more than 0.10 mm and 0.60 mm or less. The grain size of the torrefied woody biomass, from the viewpoint of availability, is, in one aspect, over a 0.10 mm screen (that is, more than 0.10 mm), over a 0.15 mm screen (that is, more than 0.15 mm), over a 0.18 mm screen (that is, more than 0.18 mm), or over a 0.212 mm screen (that is, more than 0.212 mm) (or over a 0.20 mm screen (that is, more than 0.20 mm)). If the grain size of the torrefied woody biomass is large, once peeling defects occur at the time of coking, they easily grow to large size defects. Therefore, the grain size being relatively small is advantageous in the point of the coke strength. In particular, grains with excessively large grain size not being present is advantageous on the point of the coke strength. From the above viewpoint, the grain size, in one aspect, is under a 0.60 mm screen (that is, 0.60 mm or less), preferably under a 0.55 mm screen (that is, 0.55 mm or less), under a 0.50 mm screen (that is, 0.50 mm or less), under a 0.425 mm screen (that is, 0.425 mm or less) (or under a 0.40 mm screen (that is, 0.40 mm or less)), under a 0.355 mm screen (that is, 0.355 mm or less (or under a 0.35 mm screen (that is, 0.35 mm or less)), or under a 0.30 mm screen (that is, 0.30 mm or less). The grain size is specifically evaluated based on "5. Grain Size Test Method" of JIS M8801:2008 using a sieve based on JIS Z8801:2019.

The grain size may be adjusted to the desired range by crushing the torrefied woody biomass (for example, pellets) under controlled conditions. The crushing may for example be performed by using a crusher of the compression type, shear type, cutting type, impact type, and/or friction type. As crushers, hammer mills, cutter mills, ball mills, etc. may be illustrated. The crushing may be the dry type or wet type, but preferably is the dry type. In one preferable aspect, for example, a torrefied woody biomass with a grain size of more than 0.10 mm and 0.60 mm or less can be prepared by crushing pellets of a torrefied woody biomass using a hammer mill under conditions set according to the target grain size. In one aspect, the crushed product may be further classified by sieves. For example, it is possible to classify the crushed product by a 0.10 mm sieve and 0.60 mm sieve based on JIS Z8801:2019 to recover grains over a 0.10 mm screen and under a 0.60 mm screen and thereby obtain torrefied woody biomass having a grain size of over a 0.10 mm screen (more than 0.10 mm) and under a 0.60 mm screen (0.60 mm or less). Further, the grains of over a 0.60 mm screen removed by the above classification may be again supplied to the above crushing.

As explained above, the grain size of a torrefied woody biomass being relatively small is advantageous in the point of the coke strength. The inventors took note of the fact that even if the grain size of a torrefied woody biomass is similar, if the amount of volatile matter of that torrefied woody biomass differs, the shrinkage behavior at the time of coking will differ, and studied techniques for simply obtaining a torrefied woody biomass not readily causing a drop in coke strength. As a result, they discovered that by adjusting the grain size of a torrefied woody biomass to a predetermined range in accordance with the amount of volatile matter, it is possible to excellently suppress peeling defects between the coke parts derived from the coal and coke parts derived from the biomass at the time of coking. The grain size can be easily controlled by adjusting the crushing conditions etc., therefore using a torrefied woody biomass selected in grain size by such a technique is advantageous from the viewpoint of easily producing coke using a torrefied woody biomass while having excellent coke strength.

Specifically, in a torrefied woody biomass with a large amount of volatile matter, the heat shrinkage rate at the time of coking is high, therefore a smaller grain size is advantageous. On the other hand, in a torrefied woody biomass with a small amount of volatile matter, the heat shrinkage rate at the time of coking is low and peeling defects seldom occur, therefore even if the grain size is made larger by a certain extent, the coke strength does not readily fall. According to studies of the inventors, if the amount of volatile matter of a torrefied woody biomass is generally 25 mass% or less, reduction of peeling defects is realized well by reducing the grain size to a certain extent, but if the amount of volatile matter is generally more than 25 mass%, reduction of peeling defects requires much smaller grain size. If the amount of volatile matter is generally more than 40 mass%, even if making the grain size smaller, reduction of peeling defects tends to become harder. From such a viewpoint, in one aspect, a torrefied woody biomass with an amount of volatile matter of 40 mass% or less is used. The target grain size of the torrefied woody biomass is made to differ between the case where the amount of volatile matter is more than 25 mass% and the case where it is 25 mass% or less and the crushing conditions are suitably designed so that such a target grain size is obtained.

The torrefied woody biomass according to one aspect

(1) has an amount of volatile matter of 25 mass% or less and a grain size giving a mass ratio of over a 0.10 mm screen and under a 0.60 mm screen of 60 mass% or more in sieving based on the grain size test method prescribed in JIS M8801:2008 or

(2) has an amount of volatile matter of more than 25 mass% and 40 mass% or less and a grain size giving a mass ratio of over a 0.10 mm screen and under a 0.30 mm screen of 60 mass% or more in the sieving.

A torrefied woody biomass satisfying the above condition (1) and a torrefied woody biomass satisfying the above condition (2) may be used combined.

The torrefied woody biomass according to one aspect

(1) has an amount of volatile matter of 25 mass% or less and a grain size over a 0.10 mm screen (more than 0.10 mm) and under a 0.60 mm screen (0.60 mm or less) or

(2) has an amount of volatile matter of more than 25 mass% and 40 mass% or less and a grain size over a 0.10 mm screen (more than 0.10 mm) and under a 0.30 mm screen (0.30 mm or less).

A torrefied woody biomass satisfying the above condition (1) and a torrefied woody biomass satisfying the above condition (2) may be used combined.

If the amount of volatile matter of the torrefied woody biomass is 25 mass% or less, the heat shrinkage rate of the torrefied woody biomass can be made to approach that of coal to an extent useful for reducing peeling defects.

From the viewpoint of reducing shrinkage at the time of coking and obtaining a high coke strength, the amount of volatile matter of the torrefied woody biomass is preferably 40 mass% or less, 38.2 mass% or less, 35 mass% or less, 30 mass% or less, 25 mass% or less, 23.7 mass% or less, or 20 mass% or less. From the viewpoint of ease of designing carbonization conditions where the carbonization of the woody biomass will stop at torrefaction, the amount of volatile matter of the torrefied woody biomass is preferably 1 mass% or more, 3 mass% or more, 5 mass% or more, 10 mass% or more, 15 mass% or more, or 15.9 mass% or more. In one aspect, the amount of volatile matter of the torrefied woody biomass may be more than 23.7 mass% and 38.2 mass% or less.

In one aspect, the amount of volatile matter in the case of the amount of volatile matter of the torrefied woody biomass being 25 mass% or less may be 15.9 mass% or more and 23.7 mass% or less.

In one aspect, the amount of volatile matter in the case of the amount of volatile matter of the torrefied woody biomass being more than 25 mass% and 40 mass% or less may be 28.9 mass% or more and 38.2 mass% or less.

The amount of volatile matter can be controlled by adjusting the above-mentioned heating conditions at the time of torrefaction etc.

The amount of volatile matter of the present disclosure is a value obtained in accordance with the following formula from an amount of decrease of mass Y (unit: g) and an amount of moisture Z (unit: g) taken out from the system when placing a sample X (unit: g) in a covered crucible and heating it at 900°C for 7 minutes so as not to contact the air:

$$\text{Amount of volatile matter (unit: mass\%)} = (Y-Z)/X \times 100$$

Note that, the amount of moisture Z is a value measured based on JIS M8820-2000.

In general, when heating a woody biomass, volatile matter start to be rapidly desorbed in the range of temperature from near 300°C to near 500°C. At a higher temperature than this, the effect tends to be substantially saturated. According to the heating condition of heating at 900°C for 7 minutes, the volatile matter in the sample substantially completely evaporates, therefore the amount of volatile matter in a woody biomass can be suitably evaluated based on the change in mass before and after heating under the above heating conditions.

<Coal and Blended Coal >

The blended coal of the present embodiment includes a torrefied woody biomass and coal. Aspects where the blended coal includes components other than a torrefied woody biomass and coal are not excluded so long as the effect of the present invention is not impaired, but in a typical aspect, the blended coal is comprised of only a torrefied woody biomass and coal.

The coal which the blended coal contains may be one or more types of coal and may be pulverized coal. The type of the coal is not particularly limited. Pulverized coal indicates coal which has been crushed. Coal further adjusted in grain size after crushing and agglomerate coal in the case where agglomerate coal are mixed in are also covered. In the present disclosure, "agglomerate coal" indicates coal with a spherical equivalent radius of less than 6 mm obtained by adding to pulverized coal (in one aspect, pulverized coal under the 0.3 mm screen) a binder and press forming it.

The moisture contents of the coal and blended coal in one aspect may be 5 mass% to 10 mass%. The moisture contents of the coal and blended coal may respectively be reduced by for example a conventional known coal dryer.

According to the present embodiment, it is possible to use a biomass while excellently suppressing a drop in coke strength, therefore it is possible to make the ratio of the torrefied woody biomass to the blended coal as 100 mass% a relatively large amount of a maximum of 5.0 mass%. From the viewpoint of excellently obtaining the advantages of use of a biomass, this ratio is preferably 1.0 mass% or more, 1.5 mass% or more, or 2.0 mass% or more. From the viewpoint of maintaining a good coke strength, it is preferably 5.0 mass% or less, 4.0 mass% or less, or 3.0 mass% or less.

<Step of Preparing Blended Coal>

The method of production of coke of the present embodiment includes a step of preparing a blended coal containing coal and a torrefied woody biomass. The blended coal may be prepared by mixing coal and a torrefied woody biomass to produce the blended coal or may be prepared by acquiring a blended coal containing coal and a torrefied woody biomass made in advance. In one aspect, the torrefied woody biomass is a product obtained by heat treating a woody biomass at 200°C or more and 500°C or less. The heat treatment may also be dry distillation (that is, heating in a state cut off from the air). The heat treatment may also be performed in superheated steam. In one aspect, the method of production of coke may include a step of producing a torrefied woody biomass. For example, the method of production of coke may include a step of heat treating a woody biomass at 200°C or more and 500°C or less to produce a torrefied woody biomass.

<Step of Converting Blended Coal to Coke>

The method of production of coke of the present embodiment includes a step of converting the above-mentioned blended coal to coke. The coke furnace may be any conventionally known coke furnace. The shrinkage behavior of a torrefied woody biomass at the time of coking resembles that of coal, therefore it is possible to obtain coke with excellent coke strength by carbonizing the blended coal of the present embodiment using an existing coke furnace under existing coking conditions. The torrefied woody biomass and the coal may be mixed in advance, then charged into the coke furnace. The carbonization conditions for the coking (temperature, time, etc.) may be made similar to the case of using only coal to produce coke. In one aspect, the carbonization temperature may be 700°C to 1400°C or so.

[Additional Embodiments]

If the amount of volatile matter of the torrefied woody biomass is 25 mass% or less, reduction of peeling defects is excellently realized by making the grain size smaller by a certain degree, but in one aspect, the grain size may be reduced even more. For example, in a torrefied woody biomass with an amount of volatile matter somewhat below 25 mass%, the grain size may be reduced even more. That is, in one aspect, instead of making the target grain size of the torrefied woody biomass different between if the amount of volatile matter is more than 25 mass% and is 25 mass% or less, it is also possible to make the target grain size of the torrefied woody biomass different between if an amount of volatile matter falling somewhat below 25 mass% is exceeded and if it is that amount of volatile matter or less.
In one aspect, the torrefied woody biomass can

(1) have an amount of volatile matter of 15.9 mass% or more and 23.7 mass% or less and a grain size giving a mass ratio of over a 0.10 mm screen and under a 0.60 mm screen of 60 mass% or more in sieving based on the grain size test method prescribed in JIS M8801:2008 or
(2) have an amount of volatile matter of more than 23.7 mass% and 38.2 mass% or less and a grain size giving a mass ratio of over a 0.10 mm screen and under a 0.30 mm screen of 60 mass% or more in the sieving.

A torrefied woody biomass satisfying the above condition (1) and a torrefied woody biomass satisfying the above condition (2) may be used combined.
In one aspect, the torrefied woody biomass can

(1) have an amount of volatile matter of 15.9 mass% or more and 23.7 mass% or less and a grain size of over a 0.10 mm screen and under a 0.60 mm screen in sieving based on the grain size test method prescribed in JIS M8801:2008 or
(2) have an amount of volatile matter of more than 23.7 mass% and 38.2 mass% or less and a grain size of over a 0.10 mm screen and under a 0.30 mm screen in sieving based on the grain size test method prescribed in JIS M8801:2008.

A torrefied woody biomass satisfying the above condition (1) and a torrefied woody biomass satisfying the above condition (2) may be used combined.
Further, in one aspect, the grain size of the torrefied woody biomass may be adjusted in accordance with the amount of volatile matter of the torrefied woody biomass. For example, the grain size of the torrefied woody biomass may be adjusted in accordance with the amount of volatile matter based on a relational expression prepared in advance of a variable x of an amount of volatile matter of the torrefied woody biomass and a variable y of a grain size of the torrefied woody biomass. The relational expression may be an expression with a negative slant ($\Delta y/\Delta x$) which is a ratio of an amount of increase $\Delta y$ of the variable y with respect to an amount of increase $\Delta x$ of the variable x. The above slant may be an exponential function, linear function, or other slant. In one aspect, the grain size of the variable y may be the "mean size of grains of over a 0.038 mm screen and under a 2.80 mm screen" of the present disclosure. In this case, the mass ratio of under a 0.038 mm screen is preferably 1 mass% or less and the mass ratio of over a 2.80 mm screen is preferably 1 mass% or less. In one aspect, the relational expression is obtained by (1) setting the desired target coke strength as the threshold, (2) changing the combination of the amount of volatile matter and grain size for any one type of torrefied woody biomass selected while investigating if the coke strength becomes the above threshold or more, and (3) deriving the relational expression based on the combination of the amount of volatile matter and grain size giving coke of the above threshold or more.

In one aspect, the torrefied woody biomass may have an amount of volatile matter of 40 mass% or less and a grain size giving a mass ratio of over a 0.10 mm screen and under a 0.60 mm screen of 60 mass% or more in sieving based on the grain size test method prescribed in JIS M8801:2008,

the grain size of the torrefied woody biomass may be adjusted in accordance with the amount of volatile matter of the torrefied woody biomass based on a relational expression prepared in advance of a variable x of an amount of volatile matter of the torrefied woody biomass and a variable y of a grain size of the torrefied woody biomass, and

the relational expression may be an expression with a negative slant ($\Delta y/\Delta x$) which is a ratio of an amount of increase $\Delta y$ of the variable y with respect to an amount of increase $\Delta x$ of the variable x.

EXAMPLES

Below, the illustrative aspect of the present invention will be further explained while giving examples, but the present invention is not limited to these examples in any way.

<Preparation of Torrefied woody biomass and Coal>

[Preparation of Torrefied woody biomasses 1 to 6]

A commercially available pellet shaped torrefied woody biomass 1 with an amount of volatile matter (VM) of 38.2 mass% was prepared. The pellets were charged into a range of a two-sided furnace dry distillation container after removal of the longitudinal direction board (width 40 mm×height 60 mm×length 136 mm). The pellets were heated at the different temperatures shown in Table 1 at ordinary pressure to thereby obtain the pellet shaped torrefied woody biomasses 2 to 6 shown in Table 1.

Specifically, thermocouples were placed at the coal center part and outermost side in the furnace width direction of the two-sided furnace dry distillation container. The heating temperatures were made the five levels of 265°C, 285°C, 300°C, 320°C, and 380°C. A program was set for raising the temperature up to a temperature 30°C higher than the above heating temperature by 2°C/min at each level. After the furnace temperature approached each temperature of the above five levels, when the mean temperatures of the two measurement points of the coal center part and outermost side of the position of furnace height of 30 mm (that is, position in middle of height of 60 mm) became the above five levels, the temperature was stopped from rising and was held, then was cooled. The temperature was held for 1 hour. After cooling, the samples were stored in zipper bags.

Note that the heating temperature shown in Table 1 is determined by finding in advance the relationship between the heating temperature of the torrefied woody biomass 1 and the amount of reduction of mass by a thermal balance and setting it based on that relationship so that torrefied woody biomasses 2 to 6 having the desired amount of volatile matter are obtained.

[Table 1]

| Table 1. Amount of Volatile Natter (VM) | | |
|---|---|---|
| | Heating temperature [°C] | Amount of volatile matter (VM) [mass%] |
| Torrefied woody biomass 1 | No heating | 38.2 |
| Torrefied woody biomass 2 | 265 | 34.4 |
| Torrefied woody biomass 3 | 285 | 28.9 |
| Torrefied woody biomass 4 | 300 | 23.7 |
| Torrefied woody biomass 5 | 320 | 20.8 |
| Torrefied woody biomass 6 | 380 | 15.9 |

Each of the torrefied woody biomasses 1 to 6 was crushed by a hammer mill and sieved based on "8. Method of Determination of Grain Size" of JIS M8100:1992 using a sieve based on JIS Z8801:2019. Due to this, samples of four grain size classes of grain size classes based on "5. Grain Size Test Method" of JIS M8801:2008 of (a) more than 0.10 mm and 0.30 mm or less, (b) more than 0.30 mm and 0.60 mm or less, (c) more than 0.60 mm and 1.00 mm or less, and (d) more than 1.00 mm and 3.00 mm (screen size of 2.80 mm) or less were obtained.

[Coal]

As the coal, caking coal having an amount of volatile matter (VM) of 27.5 mass% and a ratio under a 3 mm screen of 100 mass% was used.

[Amount of Volatile Matter]

For each of the torrefied woody biomasses and coal, a 1 g sample was placed in a covered crucible and heated at 900°C for 7 minutes so as not to contact the air. The amount was found in accordance with the following formula from an amount of decrease of mass Y (unit: g) and an amount of moisture Z (unit: g) taken out from the system.

$$\text{Amount of volatile matter (unit: mass\%)} = (Y-Z)/1 \text{ (unit: g)} \times 100$$

Note that the samples used had moisture contents of substantially 0 mass%, therefore the moisture content Z was calculated as 0 g.

[Proximate Analysis and Elemental Analysis]

The torrefied woody biomass 1 and coal (coking coal) were analyzed by proximate analysis based on JIS M8812:2006 and by elemental analysis based on JIS M8813:2006. Note that torrefied woody biomass has a large amount of volatile matter, therefore the value of fixed oxygen in the proximate analysis and C and O in the elemental analysis were high. The results are shown in Table 2.

[Table 2]

| Table 2. Proximate Analysis and Elemental Analysis | | | | | | | | |
|---|---|---|---|---|---|---|---|---|
| | Proximate analysis [mass%, dried standard] | | | Elemental analysis [mass%, dried standard) | | | | |
| Type of analysis | Ash | Volatile matter | Fixed carbon | C | H | N | O | S |
| Torrefied woody biomass 1 | 3.4 | 38.2 | 64.5 | 75.3 | 3.14 | 0.55 | 18.2 | 0.02 |
| Coking coal | 8.7 | 21.2 | 70.1 | 82.3 | 4.51 | 1.46 | 2.69 | 0.34 |

[Gas Analysis]

The torrefied woody biomass 1 and coal (coking coal) were analyzed for gases by a gas chromatograph/thermal conductivity detector (GC/TCD). Note that, the torrefied woody biomass had a large oxygen content, therefore the amounts of production of CO and $CO_2$ tended to be great and the amount of production of hydrocarbon-based gases tended to be small. However, there was no great difference between the torrefied woody biomass and coal in the types of gases produced. The results are shown in Table 3.

[Table 3]

| Table 3: Gas Analysis | | | | | |
|---|---|---|---|---|---|
| | H2 | $CH_4$ | $CO+CO_2$ | C2,C3 | N2 |
| Torrefied woody biomass 1 | 50 | 17 | 33 | <0.1 | - |
| Coking coal | 55 | 31 | 7 | 3 | 4 |

<Production and Evaluation of Coke>

[Examples 1 to 6]

To 95 parts by mass of coal, 5 parts by mass of the torrefied woody biomasses 1 to 6 of the grain size class (a) of more than 0.10 mm and 0.30 mm or less were added to obtain seven types of blended coal with a torrefied woody biomass ratio of 5 mass%. Each blended coal was charged into a carbonization container with a coal charging capacity of width 40 mm×length 60 mm×height 60 mm at a bulk density of 0.8 [g/cm$^3$] (coal charging amount about 116 g) and raised in temperature by a rate of temperature rise of 3°C/min from ordinary temperature to 1,000°C to carbonize the blended coal which was then cooled. From the carbonized sample, the powder part was removed to recover only the lumps. The lumps were inserted into an I-type drum (cylindrical size: diameter 132 mm×length 700 mm) and spun at a speed of 20 rpm for 30 minutes, that is, 600 revolutions, then measured for mass ratio over a 9.8 mm screen. That value was defined as the I-type drum strength.

[Examples 7 to 9 and Comparative Examples 1 to 3]

Except for using as the torrefied woody biomasses 1 to 6, biomasses with a grain size class (b) more than 0.30 mm and 0.60 mm or less, the same procedure as in Example 1 was used to produce and evaluate coke.

[Comparative Examples 4 to 9]

Except for using as the torrefied woody biomasses 1 to 6, biomasses with a grain size class (c) more than 0.60 mm and 1.00 mm or less, the same procedure as in Example 1 was used to produce and evaluate coke.

[Comparative Examples 10 to 15]

Except for using as the torrefied woody biomasses 1 to 6, biomasses with a grain size class (d) more than 1.00 mm and 3.00 mm or less, the same procedure as in Example 1 was used to produce and evaluate coke.

[Reference Example 1]

Except for replacing the blended coal with just coal, the same procedure as in Example 1 was used to produce and evaluate coke.

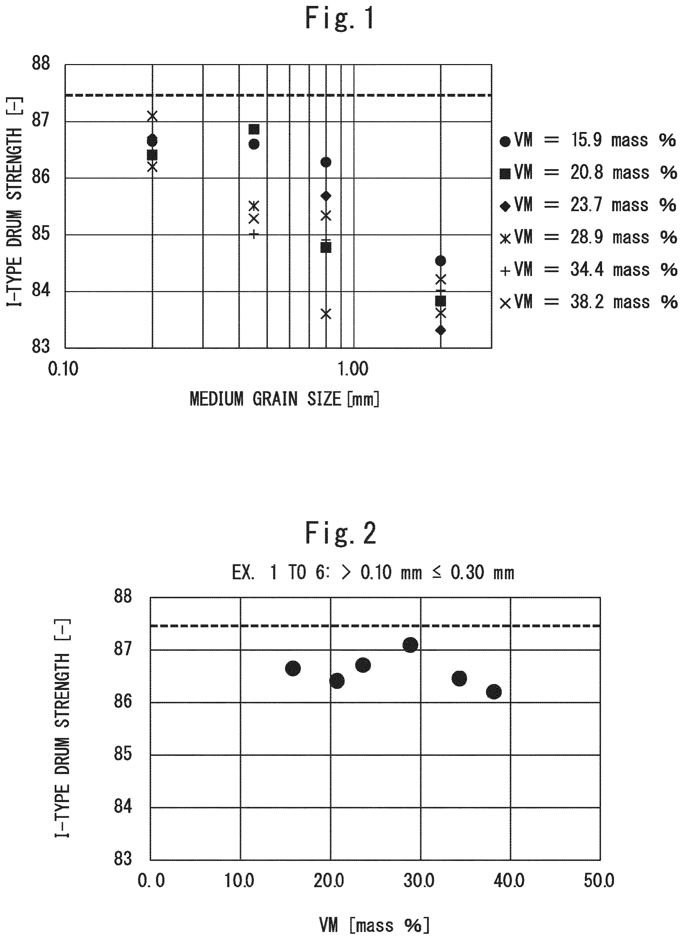

FIG. 1 is a view showing a relationship between a grain size of a torrefied woody biomass and an I-type drum strength of the coke. In FIG. 1, for convenience, each grain size class is plotted by center values that are the medium grain size. That is, the grain size class (a) more than 0.10 mm and 0.30 mm or less, (b) more than 0.30 mm and 0.60 mm or less, (c) more than 0.60 mm and 1.00 mm or less, and (d) more than 1.00 mm and 3.00 mm or less are plotted by 0.20 mm, 0.45 mm, 0.80 mm, and 2.00 mm.

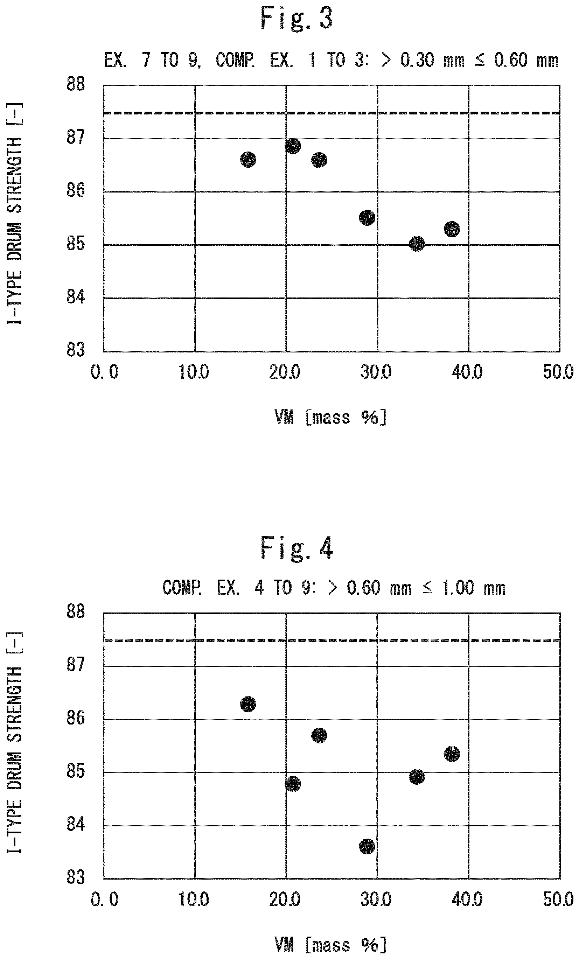

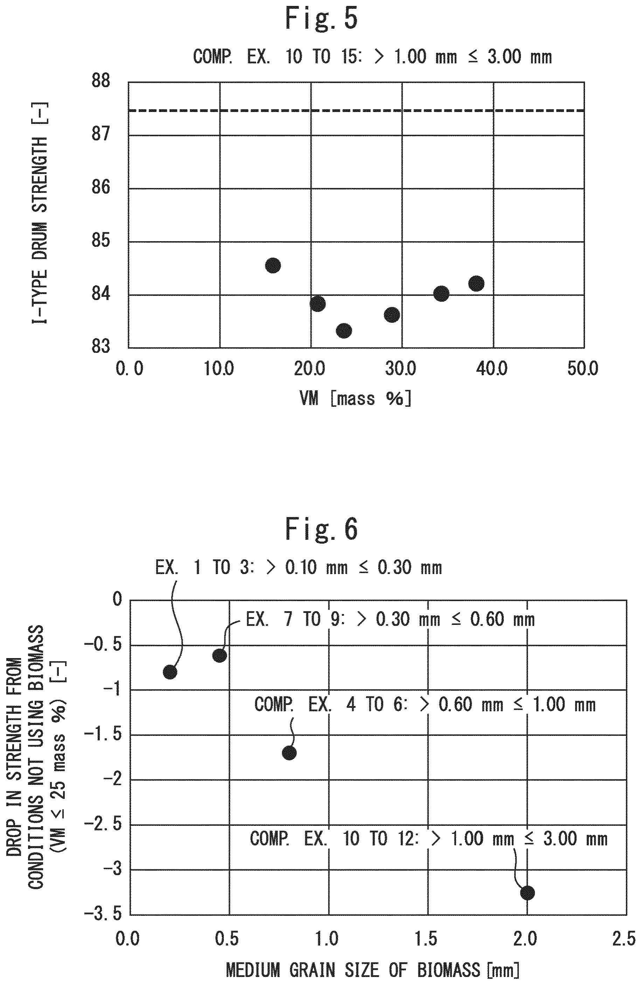

FIGS. 2 to 5 are views respectively showing a relationship between an amount of volatile matter (VM) of a torrefied woody biomass and an I-type drum strength of the coke for the grain size class (a) of more than 0.10 mm and 0.30 mm or less relating to Examples 1 to 6 (FIG. 2), the grain size class (b) of more than 0.30 mm and 0.60 mm or less relating to Examples 7 to 9 and Comparative Examples 1 to 3 (FIG. 3), the grain size class (c) of more than 0.60 mm and 1.00 mm or less relating to Comparative Examples 4 to 9 (FIG. 4), and the grain size class (d) of more than 1.00 mm and 3.00 mm or less relating to Comparative Examples 10 to 15 (FIG. 5).

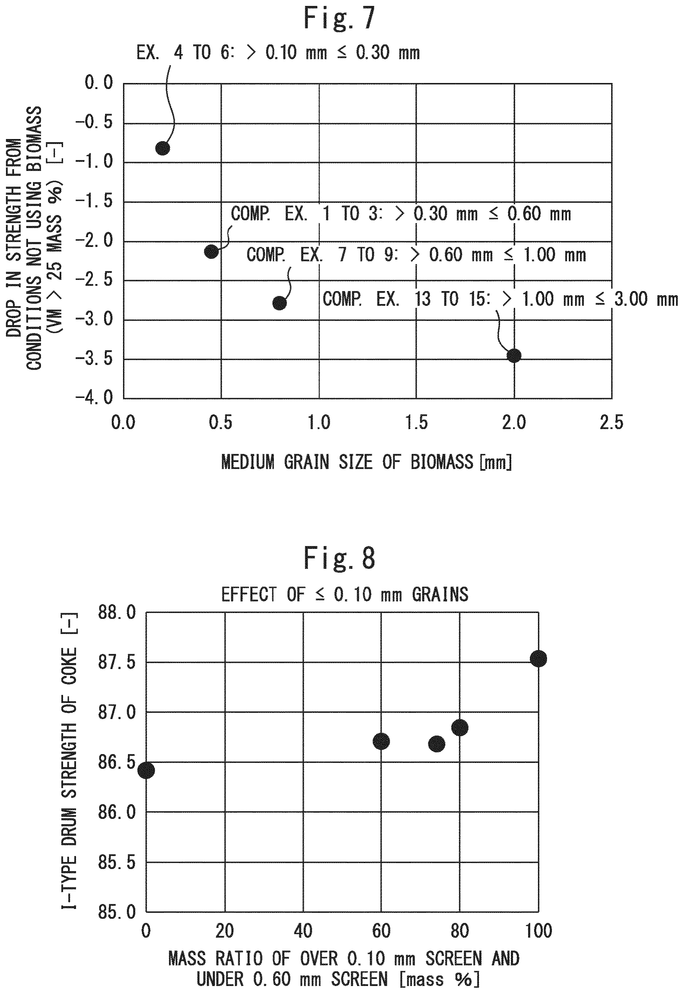

FIGS. 6 and 7 are views showing the degree of drop in strength of the I-type drum strength of the coke due to the use of a torrefied woody biomass from the drop in strength under the conditions of non use of biomass using the mean value at an amount of volatile matter (VM) of 25 mass% or less (FIG. 6) and the mean value at an amount of volatile matter (VM) of more than 25 mass% (FIG. 7).

As shown in FIGS. 1 to 5, the I-type drum strength of Reference Example 1 of carbonization of only coal is 87.44 (broken lines in FIGS. 1 to 5). In each blended coal, a drop in the I-type drum strength was seen due to the effect of use of a torrefied woody biomass, but in the grain size class (a) of more than 0.10 mm and 0.30 mm or less (Examples 1 to 6) and grain size class (b) of more than 0.30 mm and 0.60 mm or less (Examples 7 to 9 and Comparative Examples 1 to 3), the drop in the I-type drum strength was small. As shown in FIGS. 1, 2, 6, and 7, in Examples 1 to 6, in all blended coals with an amount of volatile matter of a torrefied woody biomass of 38.2 mass% or less, no marked drop could be seen in I-type drum strength due to the effect of use of a torrefied woody biomass and the effect of the volatile matter in the torrefied woody biomass on the I-type drum strength was small. On the other hand, as shown in FIGS. 1, 3, 6, and 7, in Examples 7 to 9 and Comparative Examples 1 to 3, compared with the group of blended coals with an amount of volatile matter of the torrefied woody biomass of more than 25 mass% (Comparative Examples 1 to 3), in the group of blended coals with an amount of volatile matter of the torrefied woody biomass of 25 mass% or less (Examples 7 to 9), the degree of drop in the I-type drum strength due to the effects of use of torrefied woody biomass was remarkably small.

Further, as shown in FIGS. 1 and 4 to 7, at the grain size class (c) of more than 0.60 mm and 1.00 mm or less (Comparative Examples 4 to 9) and the grain size class (d) of more than 1.00 mm and 3.00 mm or less (Comparative Examples 10 to 15), the I-type drum strength greatly fell due to the effect of the use of the torrefied woody biomass, but no clear trends were observed due to the amounts of volatile matter.

From the above results, it was learned that if the grain size of a torrefied woody biomass becomes more than 0.60 mm, the drop in the I-type drum strength of the coke becomes greater, therefore it is advantageous that the grain size of the torrefied woody biomass be more than 0.10 mm and 0.60 mm or less and that in the range of a grain size of more than 0.30 mm and 0.60 mm or less, if the amount of volatile matter is more than 25 mass%, the volatile matter remarkably affects the I-type drum strength, but if the amount of volatile matter is 25 mass% or less, the effect of the volatile matter on the I-type drum strength is small. Note that, the fact that if the amount of volatile matter is 25 mass% or less, the I-type drum strength was excellent both in the case of a grain size of more than 0.10 mm and 0.30 mm or less and a grain size of more than 0.30 mm and 0.60 mm or less means that excellent I-type drum strength is obtained with a grain size of more than 0.10 mm and 0.60 mm or less.

That is, when producing coke using a blended coal comprised of a torrefied woody biomass added to coal, it is believed that by selecting a suitable grain size range in accordance with the amount of volatile matter of the torrefied woody biomass, it is possible to keep to a minimum the drop in coke strength due to use of a torrefied woody biomass.

[Examples 10 to 13 and Comparative Example 16]

Except for using, as the torrefied woody biomass, torrefied woody biomass grains having an amount of volatile matter of 23.7 mass% and a grain size distribution shown in Table 4, the same procedure as in Example 1 was used to measure the I-type drum strength of coke. Torrefied woody biomass grains having a grain size distribution shown in Table 4 were produced by the following method.

A torrefied woody biomass was crushed by a hammer mill and sieved using a sieve based on JIS Z8801: 2019 based on the "8. Method of Determination of Grain Size" of JIS M8100: 1992. Due to this, samples of, as classes of grain size based on "5. Grain Size Test Method" of JIS M8801:2008 or the four grain size classes of more than 0.038 mm and 0.10 mm or less, more than 0.10 mm and 0.15 mm or less, more than 0.15 mm and 0.30 mm or less, and more than 0.30 mm and 0.60 mm or less (for Comparative Example 16 and Example 10) or of the two grain size classes of more than 0.038 mm and 0.10 mm or less and more than 0.10 mm and 0.60 mm or less (for Examples 11 to 13) were obtained.

[Table 4]

| Table 4: Amount of Volatile Matter of 25 Mass% or Less | | | | | | |
|---|---|---|---|---|---|---|
| | Medium grain size [mm] | Comp. Ex. 16 | Ex. 10 | Ex. 11 | Ex. 12 | Ex. 13 |
| More than 0.038 mm and 0.10 mm or less [mass%] | 0.069 | 100 | 40 | 26 | 20 | 0 |
| More than 0.10 mm and 0.15 mm or less [mass%] | 0.125 | 0.0 | 8.9 | - | - | - |
| More than 0.15 mm and 0.30 mm or less [mass%] | 0.225 | 0.0 | 25.0 | - | - | - |
| More than 0.30 mm and 0.60 mm or less [mass%] | 0.450 | 0.0 | 26.1 | - | - | - |
| More than 0.10 mm and 0.60 mm or less(*) [mass%] | 0.350 | 0 | 60 | 74 | 80 | 100 |
| Mean size [mm] | | 0.069 | 0.212 | 0.277 | 0.294 | 0.350 |
| I-type drum strength of the coke | | 86.42 | 86.71 | 86.68 | 86.85 | 87.53 |

(*) For Comparative Example 16 and Example 10, this is the total mass ratio of over a 0.10 mm screen and under a 0.15 mm screen, over a 0.15 mm screen and under a 0.30 mm screen, and over a 0.30 mm screen and under a 0.60 mm size while for Examples 11 to 13, this is the mass ratio of over a 0.10 mm screen and under a 0.60 mm screen.

As shown in Table 4 and FIG. 8, if the mass ratio of grains of more than 0.10 mm and 0.60 mm or less is 100 mass%, the I-type drum strength of the coke was the best. Further, even if there were less than 0.10 mm grains present, if the mass ratio of these grains was 40 mass% or less, the I-type drum strength of the coke was excellent.

[Examples 14 to 17 and Comparative Example 17]

Except for using, as the torrefied woody biomass, torrefied woody biomass grains having an amounts of volatile matter of 23.7 mass% and grain size distributions shown in Table 5, the same procedure as in Example 10 was used to measure the I-type drum strength of coke. The grain size classes were the four classes of more than 0.10 mm and 0.15 mm or less, more than 0.15 mm and 0.30 mm or less, more than 0.30 mm and 0.60 mm or less, and more than 0.60 mm and 1.00 mm or less (for Comparative Example 17 and Example 14) or the two classes of more than 0.10 mm and 0.60 mm or less or more than 0.60 mm and 1.00 mm or less (for Examples 15 to 17).

[Table 5]

| Table 5: Amount of Volatile Matter of 25 Mass% or Less | | | | | | |
|---|---|---|---|---|---|---|
| | Medium grain size [mm] | Comp. Ex. 17 | Ex. 14 | Ex. 15 | Ex. 16 | Ex. 17 |
| More than 0.10 mm and 0.15 mm or less [mass%] | 0.125 | 0.0 | 8.9 | - | - | - |
| More than 0.15 mm and 0.30 mm or less [mass%] | 0.225 | 0.0 | 25.0 | - | - | - |
| More than 0.30 mm and 0.60 mm or less [mass%] | 0.450 | 0.0 | 26.1 | - | - | - |
| More than 0.60 mm and 1.00 mm or less [mass%] | 0.800 | 100 | 40 | 26 | 20 | 0 |
| More than 0.10 mm and 0.60 mm or less(*) [mass%] | 0.350 | 0 | 60 | 74 | 80 | 100 |
| Mean size [mm] | | 0.800 | 0.505 | 0.467 | 0.440 | 0.350 |
| I-type drum strength of coke | | 85.18 | 87.07 | 86.75 | 87.10 | 87.53 |
| (*) For Comparative Example 17 and Example 14, this is the total mass ratio of over a 0.10 mm screen and under a 0.15 mm screen, over a 0.15 mm screen and under a 0.30 mm screen, and over a 0.30 mm screen and under a 0.60 mm size while for Examples 15 to 17, this is the mass ratio of over a 0.10 mm screen and under a 0.60 mm screen. | | | | | | |

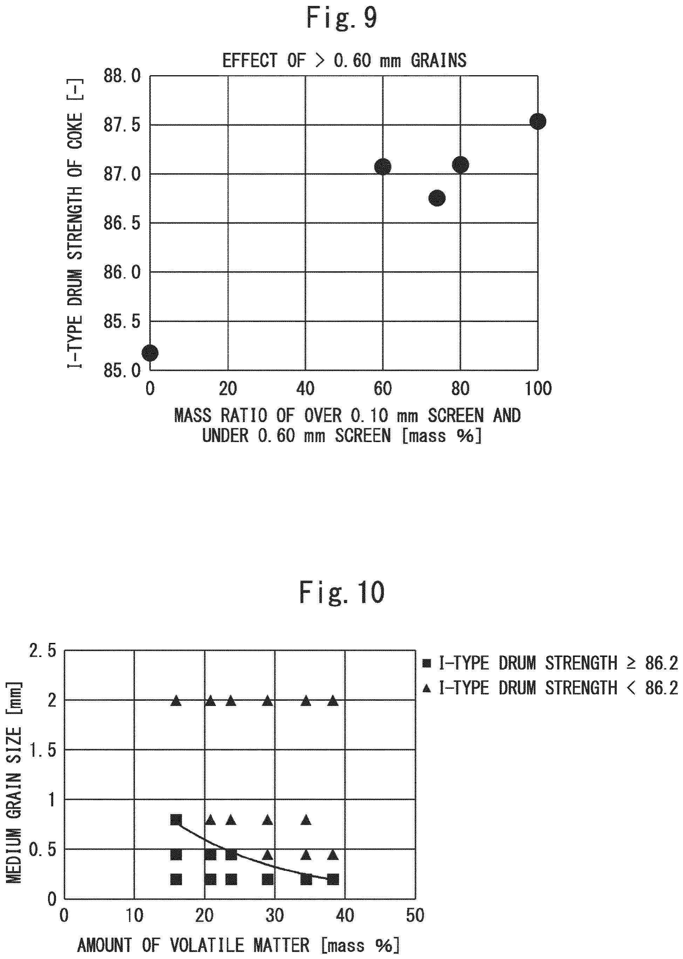

As shown in Table 5 and FIG. 9, if the mass ratio of the grains of more than 0.10 mm and 0.60 mm or less was 100 mass%, the I-type drum strength of the coke was the best. Further, even if there were grains of more than 0.60 mm present, if the mass ratio of the grains was 40 mass% or less, the I-type drum strength of the coke was excellent.

[Examples 18 to 20]

Except for using, as the torrefied woody biomass, torrefied woody biomass grains having amounts of volatile matter of 34.4 mass% and grain size distributions shown in Table 6, the same procedure as in Example 10 was used to measure the I-type drum strength of coke. The grain size classes were the four classes of more than 0.038 mm and 0.10 mm or less, more than 0.10 mm and 0.15 mm or less, more than 0.15 mm and 0.30 mm or less, and more than 0.30 mm and 0.60 mm or less (for Examples 18 and 19) or the three classes of more than 0.38 mm and 0.10 mm or less, more than 0.10 mm and 0.30 mm or less, and more than 0.30 mm and 0.60 mm or less (for Example 20).

[Table 6]

| Table 6: Amount of Volatile Matter of More Than 25 Mass% and 40 Mass% or Less | | | | |
|---|---|---|---|---|
| | Medium grain size [mm] | Ex. 18 | Ex. 19 | Ex. 20 |
| More than 0.038 mm and 0.10 mm or less [mass%] | 0.069 | 40 | 0 | 0 |
| More than 0.10 mm and 0.15 mm or less [mass%] | 0.125 | 15.7 | 15.7 | - |
| More than 0.15 mm and 0.30 mm or less [mass%] | 0.225 | 44.3 | 44.3 | - |
| More than 0.30 mm and 0.60 mm or less [mass%] | 0.450 | 0 | 40 | 0 |
| More than 0.10 mm and 0.30 mm or less(*) [mass%] | 0.200 | 60 | 60 | 100 |
| Mean size [mm] | | 0.147 | 0.299 | 0.200 |

(continued)

| Table 6: Amount of Volatile Matter of More Than 25 Mass% and 40 Mass% or Less | | | | |
|---|---|---|---|---|
| | Medium grain size [mm] | Ex. 18 | Ex. 19 | Ex. 20 |
| I-type drum strength of the coke | | 85.92 | 85.88 | 86.45 |
| (*) For Examples 18 and 19, this is the total mass ratio of over a 0.10 mm screen and under a 0.15 mm screen and over a 0.15 mm screen and under a 0.30 mm screen, while for Example 20, this is the mass ratio of over a 0.10 mm screen and under a 0.30 mm screen. | | | | |

As shown in Table 6, if the amount of volatile matter is more than 25 mass%, in Example 20 where the mass ratio of more than 0.10 mm and 0.30 mm or less is 100 mass%, the I-type drum strength of the coke was particularly excellent. In the case where there are 0.10 mm or less grains present and the mass ratio of those grains is 40 mass% or less (Example 18) and in the case where there are more than 0.30 mm grains present and the mass ratio of those grains is 40 mass% or less (Example 19) as well, the I-type drum strength of the coke was excellent.

[Derivation of Relational Expression]

FIG. 10 is a view replotting the plot shown in FIG. 1 to x-axis:amount of volatile matter and y-axis: medium grain size. Using the I-type drum strength of 86.2 when the amount of volatile matter is 38.2 mass% and the medium grain size is 0.2 mm as the threshold, the samples were separated into good samples (I-type drum strength 86.2 or more) and not good samples (I-type drum strength less than 86.2). Among the good samples, ones with the largest medium grain size among the amount of volatile matter were selected. Further, among these, ones with the largest amounts of volatile matter among those of the same medium grain size were selected. That is, finally:

an amount of volatile matter of 15.9 mass% and a medium grain size of 0.8 mm;
an amount of volatile matter of 23.7 mass% and a medium grain size of 0.45 mm; and
an amount of volatile matter of 38.2 mass% and a medium grain size of 0.2 mm,
were selected. When exponentially approximating these, the following relational expression (1) was obtained. $R^2$ was 0.9929.

$$y = 2.0435e^{-0.061x} \quad (1)$$

(where, x is the amount of volatile matter (mass%), and y is the medium grain size (mm))

The above relational expression (1) was an expression with a negative slant ($\Delta y/\Delta x$) which is a ratio of an amount of increase $\Delta y$ of the variable y with respect to an amount of increase $\Delta x$ of the variable x.

**Claims**

1. A method of production of coke, the method comprising

   a step of preparing a blended coal containing coal and a torrefied woody biomass and
   a step of converting the blended coal to coke,
   the torrefied woody biomass

   (1) having an amount of volatile matter of 25 mass% or less and a grain size giving a mass ratio of over a 0.10 mm screen and under a 0.60 mm screen of 60 mass% or more in sieving based on the grain size test method prescribed in JIS M8801:2008 or
   (2) having an amount of volatile matter of more than 25 mass% and 40 mass% or less and a grain size giving a mass ratio of over a 0.10 mm screen and under a 0.30 mm screen of 60 mass% or more in the sieving.

2. A method of production of coke, the method comprising

   a step of preparing a blended coal containing coal and a torrefied woody biomass and
   a step of converting the blended coal to coke,

the torrefied woody biomass

(1) having an amount of volatile matter of 25 mass% or less and a grain size over a 0.10 mm screen and under a 0.60 mm screen in sieving based on the grain size test method prescribed in JIS M8801:2008 or
(2) having an amount of volatile matter of more than 25 mass% and 40 mass% or less and a grain size over a 0.10 mm screen and under a 0.30 mm screen in the sieving.

3. The method of production of coke according to claim 2, wherein

the amount of volatile matter of 25 mass% or less is 15.9 mass% or more and 23.7 mass% or less, and
the amount of volatile matter of more than 25 mass% and 40 mass% or less is 28.9 mass% or more and 38.2 mass% or less.

4. A method of production of coke, the method comprising

a step of preparing a blended coal containing coal and a torrefied woody biomass and
a step of converting the blended coal to coke,
the torrefied woody biomass having an amount of volatile matter of 40 mass% or less and a grain size giving a mass ratio of over a 0.10 mm screen and under a 0.60 mm screen of 60 mass% or more in sieving based on the grain size test method prescribed in JIS M8801:2008,
the grain size of the torrefied woody biomass being adjusted in accordance with the amount of volatile matter of the torrefied woody biomass based on a relational expression prepared in advance of a variable x of an amount of volatile matter of the torrefied woody biomass and a variable y of a grain size of the torrefied woody biomass, the relational expression being an expression with a negative slant ($\Delta y/\Delta x$) which is a ratio of an amount of increase $\Delta y$ of the variable y with respect to an amount of increase $\Delta x$ of the variable x.

5. The method of production of coke according to any one of claims 1 to 4, wherein the torrefied woody biomass is a product of heat treatment of woody biomass at 200°C or more and 500°C or less.

## Fig.1

Legend:
- ● VM = 15.9 mass %
- ■ VM = 20.8 mass %
- ◆ VM = 23.7 mass %
- ✳ VM = 28.9 mass %
- + VM = 34.4 mass %
- ✕ VM = 38.2 mass %

Y-axis: I-TYPE DRUM STRENGTH [−]
X-axis: MEDIUM GRAIN SIZE [mm]

## Fig.2

EX. 1 TO 6: > 0.10 mm ≤ 0.30 mm

Y-axis: I-TYPE DRUM STRENGTH [−]
X-axis: VM [mass %]

# Fig. 3

EX. 7 TO 9, COMP. EX. 1 TO 3: > 0.30 mm ≤ 0.60 mm

# Fig. 4

COMP. EX. 4 TO 9: > 0.60 mm ≤ 1.00 mm

# Fig. 5

COMP. EX. 10 TO 15: > 1.00 mm ≤ 3.00 mm

# Fig. 6

EX. 1 TO 3: > 0.10 mm ≤ 0.30 mm

EX. 7 TO 9: > 0.30 mm ≤ 0.60 mm

COMP. EX. 4 TO 6: > 0.60 mm ≤ 1.00 mm

COMP. EX. 10 TO 12: > 1.00 mm ≤ 3.00 mm

# Fig. 7

EX. 4 TO 6: > 0.10 mm ≤ 0.30 mm

COMP. EX. 1 TO 3: > 0.30 mm ≤ 0.60 mm

COMP. EX. 7 TO 9: > 0.60 mm ≤ 1.00 mm

COMP. EX. 13 TO 15: > 1.00 mm ≤ 3.00 mm

(Y-axis) DROP IN STRENGTH FROM CONDITIONS NOT USING BIOMASS (VM > 25 MASS %) [−]

(X-axis) MEDIUM GRAIN SIZE OF BIOMASS [mm]

# Fig. 8

EFFECT OF ≤ 0.10 mm GRAINS

(Y-axis) I-TYPE DRUM STRENGTH OF COKE [−]

(X-axis) MASS RATIO OF OVER 0.10 mm SCREEN AND UNDER 0.60 mm SCREEN [mass %]

# Fig. 9

EFFECT OF > 0.60 mm GRAINS

X axis: MASS RATIO OF OVER 0.10 mm SCREEN AND UNDER 0.60 mm SCREEN [mass %]

Y axis: I-TYPE DRUM STRENGTH OF COKE [-]

# Fig. 10

■ I-TYPE DRUM STRENGTH ≥ 86.2
▲ I-TYPE DRUM STRENGTH < 86.2

X axis: AMOUNT OF VOLATILE MATTER [mass %]

Y axis: MEDIUM GRAIN SIZE [mm]

21

## INTERNATIONAL SEARCH REPORT

| International application No. |
| --- |
| **PCT/JP2024/007807** |

**A. CLASSIFICATION OF SUBJECT MATTER**

*C10B 57/04*(2006.01)i; *C10B 53/02*(2006.01)i
FI:  C10B57/04; C10B53/02

According to International Patent Classification (IPC) or to both national classification and IPC

**B. FIELDS SEARCHED**

Minimum documentation searched (classification system followed by classification symbols)

C10B1/00-57/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WIBAWA, Aditya. ASHIK, U. P. M. KUDO, Shinji. ASANO, Shusaku. GAO, Xiangpeng. HAYASHI, Jun-ichiro. High-Strength Formed Coke from Torrefied Biomass and Its Blend with Noncaking Coal. Energy Fuels. 05 August 2022, vol. 36, no. 16, 9121-9132, DOI: 10.1021/acs.energyfuels.2c01722<br>p. 9122, left column, line 62 to right column, line 2, p. 9122, right column, line 31 to p. 9123, left column, line 25, p. 9130, left column, lines 53-56 | 1-3, 5 |
| A | entire text, all drawings | 4 |
| A | WO 2020/067384 A1 (NIPPON STEEL ENGINEERING CO., LTD.) 02 April 2020 (2020-04-02)<br>entire text, all drawings | 1-5 |
| A | JP 2011-93980 A (JFE STEEL CORPORATION) 12 May 2011 (2011-05-12)<br>entire text, all drawings | 1-5 |
| A | JP 2021-176938 A (IDEMITSU KOSAN CO., LTD.) 11 November 2021 (2021-11-11)<br>entire text, all drawings | 1-5 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **13 May 2024** | **28 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/007807** |

### C. DOCUMENTS CONSIDERED TO BE RELEVANT

| Category* | Citation of document, with indication, where appropriate, of the relevant passages | Relevant to claim No. |
|---|---|---|
| A | CN 101948708 A (ZHANGJIAGANG HUAHUI SPECIAL GLASS CO., LTD.) 19 January 2011 (2011-01-19)<br>entire text, all drawings | 1-5 |

Form PCT/ISA/210 (second sheet) (July 2022)

## INTERNATIONAL SEARCH REPORT
### Information on patent family members

International application No.

**PCT/JP2024/007807**

| Patent document cited in search report | | | Publication date (day/month/year) | Patent family member(s) | | | Publication date (day/month/year) |
|---|---|---|---|---|---|---|---|
| WO | 2020/067384 | A1 | 02 April 2020 | CN 111630140 A entire text, all drawings | | | |
| JP | 2011-93980 | A | 12 May 2011 | (Family: none) | | | |
| JP | 2021-176938 | A | 11 November 2021 | (Family: none) | | | |
| CN | 101948708 | A | 19 January 2011 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004307683 A